# EUROPEAN PATENT APPLICATION

(11) **EP 4 692 871 A1**
(43) Date of publication of application: **11.02.2026**
(21) Application number: 24791834.5
(22) Date of filing: 28.03.2024
(51) Int. Cl.: G02B 6/00, F21W 106/00

(54) **OPTICAL MODULE, ELECTRONIC DEVICE, AND VEHICLE**

(30) Priority: 16.04.2023 CN 202320905870 U
(71) Applicant: Shenzhen Yinwang Intelligent Technologies Co., Ltd., Shenzhen, Guangdong 518110 (CN)
(72) Inventor: WANG, Peizhi, Shenzhen, Guangdong 518129 (CN); SHI, Hao, Shenzhen, Guangdong 518129 (CN)
(74) Representative: Gill Jennings & Every LLP
(86) International application number: PCT/CN2024/084575
(87) International publication number: WO 2024/217248

(57) **Abstract**

This application provides an optical module, an electronic device, and a vehicle, and relate to the field of optical technologies, to resolve a problem in a related technology that transmitted light of an optical module is uncontrollable. The optical module includes a light source, a light guide structure, and a light-transmitting unit. The light source includes a plurality of sub-light sources, the light guide structure includes a plurality of light guide strips, and each sub-light source is located on a light incident side of a corresponding light guide strip. The light-transmitting unit is located on a light-emitting side of the plurality of light guide strips. The light guide structure further includes at least one light-blocking portion, and every two adjacent light guide strips are spaced by one light-blocking portion. The optical module provided in this application may be used in an electronic device or a vehicle, and the light-transmitting unit in the optical module may simultaneously implement rendering effect of light of a plurality of colors.

## Description

This application claims priority to Chinese Patent Application No. 202320905870.8, filed with the China National Intellectual Property Administration on April 16, 2023 and entitled "OPTICAL MODULE, ELECTRONIC DEVICE, AND VEHICLE", which is incorporated herein by reference in its entirety.

### TECHNICAL FIELD

Embodiments of this application relate to the field of optical technologies, and in particular, to an optical module, an electronic device, and a vehicle.

### BACKGROUND

With continuous development of technologies, an electronic device that can simultaneously implement a sound playing function and a light rendering function has attracted wide attention. Such an electronic device includes an acoustic module and an optical module, where the optical module may be configured to emit light, to implement a light rendering function. However, light mixing occurs in a light guide member of the optical module, causing transmitted light of the optical module uncontrollable, and consequently, only rendering of single-color light can be formed.

### SUMMARY

An objective of embodiments of this application is to provide an optical module, an electronic device, and a vehicle, to resolve a problem in a related technology that transmitted light of an optical module is uncontrollable.

To achieve the foregoing objective, embodiments of this application provide the following solutions.

According to one aspect, an embodiment of this application provides an optical module. The optical module includes a light source, a light guide structure, and a light-transmitting unit. The light source includes a plurality of sub-light sources. The light guide structure includes a plurality of light guide strips. Each sub-light source is located on a light incident side of a corresponding light guide strip. The light-transmitting unit is located on a light-emitting side of the plurality of light guide strips. The light guide structure further includes at least one light-blocking portion, and every two adjacent light guide strips are spaced by one light-blocking portion.

In the optical module provided in this embodiment of this application, light emitted by the plurality of sub-light sources may each enter a corresponding light guide strip through a light incident side of the light guide strip, and then the light may be emitted to the light-transmitting unit from a light-emitting side of the light guide strip. In addition, because the light-blocking portion is disposed between every two adjacent light guide strips, the light emitted by the plurality of sub-light sources can be prevented from being mixed in the light guide structure, so that the light emitted by the plurality of sub-light sources can be respectively emitted to different areas of the light-transmitting unit through corresponding light guide strips, and the light-transmitting unit simultaneously implements rendering effect of light of a plurality of colors. It should be noted that no light guide member in the related technology includes the light-blocking portion. Therefore, after the light guide structure in this embodiment of this application is replaced with the light guide member, light emitted by the light source is mixed in the light guide member. Consequently, light emitted to the light-transmitting unit is uncontrollable (that is, the transmitted light of the optical module is uncontrollable), and a single gradient color is likely to be formed. The optical module provided in this embodiment of this application can well resolve the foregoing technical problem.

In some embodiments, an extension direction of the light guide strip is a first direction, and the light guide structure includes a first area and a second area that are arranged in the first direction. The first area is closer to the light source than the second area. A part that is of the light guide strip and that is in the second area includes a first surface close to the light-transmitting unit. A part that is of the light-blocking portion and that is in the second area includes a second surface close to the light-transmitting unit. The first surface is closer to the light-transmitting unit than the second surface. In this embodiment, in the second area, the first surface is disposed to be closer to the light-transmitting unit than the second surface, that is, in the second area, the light guide strip is disposed to be closer to the light-transmitting unit than the light-blocking portion, so that light conducted by the plurality of light guide strips can reach different areas of the light-transmitting unit, and a gap area between adjacent light guide strips is used to enable light on opposite side surfaces of the adjacent light guide strips to generate light mixing effect before entering the light-transmitting unit. Therefore, a transition color can be generated in a transition area between light areas of different colors of the light-transmitting unit, to enhance rendering effect.

In some embodiments, the first surface includes a contact surface, a first connection surface, and a second connection surface. The contact surface is in contact with the light-transmitting unit. An arrangement direction of the plurality of light guide strips is a second direction. The first connection surface and the second connection surface are respectively located on two opposite sides of the contact surface in the second direction, and there is a gap between the first connection surface and the light-transmitting unit and a gap between the second connection surface and the light-transmitting unit. The gap between the first connection surface and the light-transmitting unit gradually decreases in a direction of gradually approaching the contact surface; and/or the gap between the second connection surface and the light-transmitting unit gradually decreases in a direction of gradually approaching the contact surface. In this embodiment, the gap between the first connection surface and the light-transmitting unit is set to gradually decrease in the direction of gradually approaching the contact surface, so that an amount of light emitted from the first connection surface to the light-transmitting unit can be increased. The gap between the second connection surface and the light-transmitting unit is set to gradually decrease in the direction of gradually approaching the contact surface, so that an amount of light emitted from the second connection surface to the light-transmitting unit can be increased. Further, a slope of the first connection surface and a slope of the second connection surface may be further changed to adjust light mixing effect of light emitted from the first connection surface and the second connection surface, so that transition light effect of the transition area between the light areas of different colors of the light-transmitting unit may be further adjusted, to enhance the rendering effect.

In some embodiments, the light-transmitting unit includes a light scatterer. The light scatterer herein means a structure in which light entering the light scatterer can be reflected in a plurality of directions, to achieve scattering effect. In this embodiment, the light-transmitting unit is set to include the light scatterer, so that light rendering effect can be improved, and the effect is more beautiful, to further improve product competitiveness.

In some embodiments, an acoustic reflection structure is located on one side that is of the light-transmitting unit and that is away from the light guide structure. In this embodiment, the acoustic reflection structure may reflect an acoustic wave, so that the acoustic wave is scattered in different directions, to generate diffraction and change output sound quality effect. In this case, the light-transmitting unit can implement both light rendering effect and sound adjustment effect.

In some embodiments, the acoustic reflection structure includes a plurality of first groove structures. With this disposition, depths of the plurality of first groove structures may be adjusted to obtain different sound quality. In this case, a shape of the acoustic reflection structure is equivalent to being constructed as a Schroeder diffuser, and the acoustic wave may be reflected by the plurality of first groove structures, so that the acoustic wave is scattered in different directions, to generate diffraction and change output sound quality effect.

In some embodiments, the plurality of first groove structures are in a strip shape, an extension direction of the plurality of first groove structures is the same as an extension direction of the plurality of light guide strips, and an arrangement direction of the plurality of first groove structures is the same as an arrangement direction of the plurality of light guide strips. With this deposition, one or more light guide strips may be disposed on the back surface of one first groove structure, or one or more light guide strips may be disposed on the back surface of an edge structure beside the first groove structure, or a same light guide strip may be disposed on both the back surfaces of a first groove structure and an edge structure that are adjacent to each other. The back surface herein means a surface on one side that is of the light-transmitting unit and that is close to the light guide structure. In this embodiment, light rendering effect of different colors can be formed at different positions of the first groove structures and different positions of edge structures.

In some embodiments, an orthographic projection of the first groove structure on a reference surface at least partially overlaps an orthographic projection of the light guide strip on the reference surface, where the reference surface is a surface on which the first direction and the second direction are located. In this example, the orthographic projection of the first groove structure on the reference surface is set to at least partially overlap the orthographic projection of the light guide strip on the reference surface, so that light rendering effect of higher brightness can be generated at a position of the first groove structure, light rendering effect of different colors can be generated at different positions of the first groove structure, and dark transition light rendering effect can be generated at the position of the edge structure. Therefore, the light-transmitting unit can simultaneously implement rendering effect of light of a plurality of colors, and a better transition color or dark area is formed between adjacent light of two colors.

In some embodiments, a second groove structure is located on a surface that is of the light-transmitting unit and that is close to the light guide structure, and at least a part of the light guide strip extends into the second groove structure. In this embodiment, at least a part of one light guide strip may extend into the second groove structure, or at least a part of two or more light guide strips may extend into a same second groove structure. The second groove structure is located on the surface that is of the light-transmitting unit and that is close to the light guide structure, so that the second groove structure can be used to provide a positioning and support function for the light guide strip. In addition, this helps increase an amount of light emitted from the light guide strip to the light-transmitting unit, to help improve light-emitting brightness of the light-transmitting unit.

In some embodiments, a surface that is of the light-transmitting unit and that is close to the light guide structure includes a barrier layer, and a value range of transmittance of the barrier layer is from 30% to 60% (including 30% and 60%). For example, the transmittance of the barrier layer may be 30%, 35%, 50%, 55%, 60%, or the like. For example, the value range of the transmittance of the barrier layer may be from 40% to 45% (including 40% and 45%). For example, the transmittance of the barrier layer may be 40%, 41%, 42%, 43%, 44%, 45%, or the like. In this embodiment, when the transmittance of the barrier layer is close to or equal to 30%, the barrier layer can have good shielding effect on the light guide structure. In other words, when the light guide structure is in a dark state, it is difficult for human eyes to see the light guide structure from the other side of the light-transmitting unit. However, when the light guide structure is in a bright state, light of the light guide structure can still be emitted to the light-transmitting unit through the barrier layer. In addition, when the transmittance of the barrier layer is close to or equal to 60%, the barrier layer can have shielding effect on the light guide structure to some extent. In this case, when the light guide structure is in the bright state, more light of the light guide structure can be emitted to the light-transmitting unit through the barrier layer.

According to another aspect, an embodiment of this application provides an electronic device. The electronic device includes an acoustic module and an optical module. The optical module includes a light source, a light guide structure, and a light-transmitting unit. The light source includes a plurality of sub-light sources. The light guide structure includes a plurality of light guide strips. Each sub-light source is located on a light incident side of a corresponding light guide strip. The light-transmitting unit is located on a light-emitting side of the plurality of light guide strips. The light guide structure further includes at least one light-blocking portion, and every two adjacent light guide strips are spaced by one light-blocking portion. The light-transmitting unit is located between the light guide structure and the acoustic module. An acoustic reflection structure is located on one side that is of the light-transmitting unit and that is close to the acoustic module.

According to the electronic device provided in this embodiment of this application, in the optical module, light emitted by the plurality of sub-light sources may each enter a corresponding light guide strip through a light incident side of the light guide strip, and then the light may be emitted to the light-transmitting unit from a light-emitting side of the light guide strip. In addition, because the light-blocking portion is disposed between every two adjacent light guide strips, the light emitted by the plurality of sub-light sources can be prevented from being mixed in the light guide structure, so that the light emitted by the plurality of sub-light sources can be respectively emitted to different areas of the light-transmitting unit through corresponding light guide strips, and the light-transmitting unit simultaneously implements rendering effect of light of a plurality of colors. It should be noted that no light guide member in the related technology includes the light-blocking portion. Therefore, after the light guide structure in this embodiment of this application is replaced with the light guide member, light emitted by the light source is mixed in the light guide member. Consequently, light emitted to the light-transmitting unit is uncontrollable (that is, the transmitted light of the optical module is uncontrollable), and a single gradient color is likely to be formed. The optical module in the electronic device provided in this embodiment of this application can well resolve the foregoing technical problem. In addition, because the light-transmitting unit is located between the light guide structure and the acoustic module, the acoustic reflection structure is located on one side that is of the light-transmitting unit and that is close to the acoustic module, and the acoustic reflection structure may reflect an acoustic wave, so that the acoustic wave is scattered in different directions, to generate diffraction and change output sound quality effect. In this case, the light-transmitting unit can implement both light rendering effect and sound adjustment effect. Therefore, the electronic device provided in this embodiment of this application can simultaneously implement a sound playing function and a light rendering function.

According to still another aspect, an embodiment of this application provides a vehicle. The vehicle includes a vehicle body. The optical module in any one of the foregoing embodiments is disposed on the vehicle body; and/or the electronic device in any one of the foregoing embodiments is disposed on the vehicle body.

The vehicle provided in this embodiment of this application can implement functions of carrying people and carrying goods. In addition, because the vehicle has the optical module and/or the electronic device in any one of the foregoing embodiments and further has beneficial effect of the optical module and/or the electronic device in any one of the foregoing embodiments. Details are not described herein again.

### BRIEF DESCRIPTION OF DRAWINGS

FIG. 1 is a diagram of a structure of a vehicle according to an embodiment of this application;
FIG. 2 is a diagram of a cab and a center console of the vehicle in FIG. 1;
FIG. 3 is a diagram of a structure of an electronic device according to an embodiment of this application;
FIG. 4 is a sectional view of a housing in FIG. 3;
FIG. 5 is a sectional view of the electronic device in FIG. 3;
FIG. 6 is a diagram of a structure of a combination of a light source and a light guide structure according to an embodiment of this application;
FIG. 7 is a diagram of a structure of a combination of a light guide structure and a light-transmitting unit according to an embodiment of this application;
FIG. 8 is a diagram of a structure of another combination of a light guide structure and a light-transmitting unit according to an embodiment of this application;
FIG. 9 is a diagram of a structure of still another combination of a light guide structure and a light-transmitting unit according to an embodiment of this application;
FIG. 10 is a diagram of a structure of still another combination of a light guide structure and a light-transmitting unit according to an embodiment of this application;
FIG. 11 is a diagram of a structure of still another combination of a light guide structure and a light-transmitting unit according to an embodiment of this application; and
FIG. 12 is a diagram of a structure of still another combination of a light guide structure and a light-transmitting unit according to an embodiment of this application.

### DESCRIPTION OF EMBODIMENTS

The following describes the technical solutions in embodiments of this application with reference to the accompanying drawings in embodiments of this application. It is clearly that the described embodiments are merely some rather than all of embodiments of this application.

The terms such as "first" and "second" below are merely intended for convenience of description, and cannot be construed as indicating or implying relative importance or implicitly indicating a quantity of indicated technical features. Therefore, a feature limited by "first", "second", or the like may explicitly or implicitly include one or more features. In descriptions of this application, unless otherwise specified, "a plurality of" means two or more than two.

In embodiments of this application, unless otherwise clearly specified and limited, a term "electrical connection" may be direct electrical connection, or may be indirect electrical connection through an intermediate medium.

In embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a relative concept in a specific manner.

In embodiments of this application, "and/or" describes an association relationship between associated objects and indicates that three relationships may exist. For example, A and/or B may indicate the following cases: Only A exists, both A and B exist, and only B exists, where A and B may be singular or plural. The character "/" generally indicates an "or" relationship between the associated objects.

In embodiments of this application, for example, up, down, left, right, front, and rear are relative direction indications used to explain structures and movement of different parts in this application. These indications are appropriate when the parts are in positions shown in the figure. However, if descriptions of the positions of the parts change, these direction indications change correspondingly.

An embodiment of this application provides a vehicle. For example, the vehicle may be a motor vehicle or a non-motor vehicle, and the vehicle may be a fuel vehicle or an electric vehicle. Examples of vehicles include but are not limited to a car, a truck, a bus, and the like.

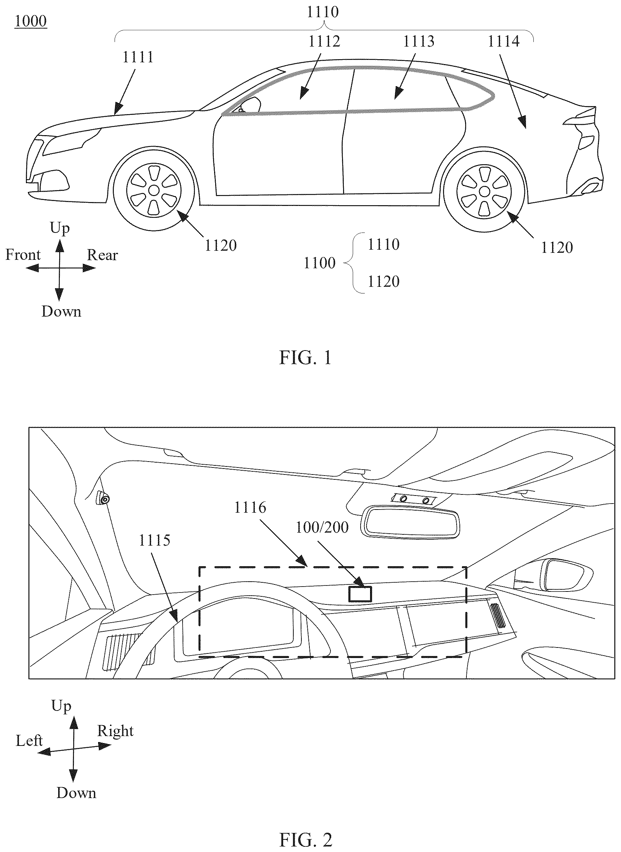

FIG. 1 is a diagram of a structure of a vehicle 1000 according to an embodiment of this application, and FIG. 2 is a diagram of a structure of a cab and a center console of the vehicle in FIG. 1. The vehicle 1000 includes a vehicle body 1100. The vehicle body 1100 may include a body 1110, tires 1120, a power mechanism (not shown in the figure), and the like. The body 1110 may be configured to form an engine compartment 1111, a cab 1112, a passenger compartment 1113, a rear trunk 1114, and the like.

The tires 1120 may be mounted below the body 1110, the power mechanism may be mounted in the engine compartment 1111, and the power mechanism may be in transmission connection to the tires 1120. Therefore, the power mechanism may transmit power to the tires 1120 to control the tires 1120 to rotate, to drive the body 1110 to move forward or backward.

The cab 1112 and the passenger compartment 1113 are located between the engine compartment 1111 and the rear trunk 1114. The cab 1112 may be close to the engine compartment 1111, and the passenger compartment 1113 may be close to the rear trunk 1114. The cab 1112 may include a driver seat and a front passenger seat. One of the driver seat and the front passenger seat is close to the left side of the body, and the other is close to the right side of the body. It may be understood that a steering wheel 1115 is disposed in front of the driver seat. A part in front of the driver seat and the front passenger seat is a center console area 1116. The passenger compartment 1113 may include a plurality of passenger positions, for example, two to three passenger positions. The rear trunk 1114 may be configured to accommodate goods.

The vehicle 1000 may further include an optical module 100 and/or an electronic device 200. The electronic device 200 is an electronic device 200 integrated with the optical module 100. For example, as shown in FIG. 2, the optical module 100 may be disposed in the center console area 1116, for example, disposed in a middle position of the center console area 1116 in a left direction and a right direction shown in the figure. The electronic device 200 may also be disposed in the center console area 1116, for example, disposed in the middle position of the center console area 1116 in the left direction and the right direction shown in the figure. It may be understood that the disposition manner of the optical module 100 and/or the electronic device 200 herein is merely an example. In another embodiment, the optical module 100 and/or the electronic device 200 may alternatively be disposed at another position of the body.

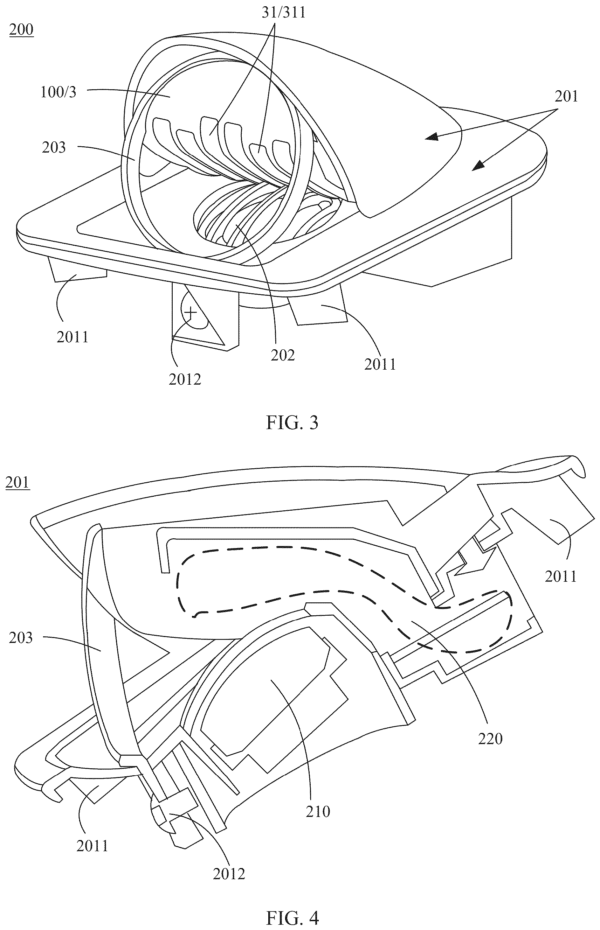

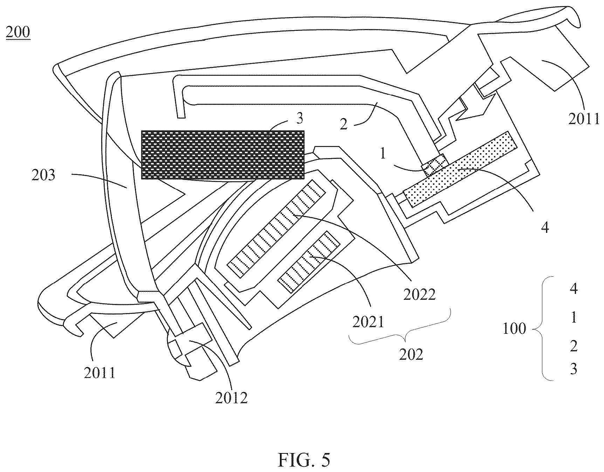

FIG. 3 is a diagram of a structure of an electronic device 200 according to an embodiment of this application. FIG. 4 is a sectional view of a housing in FIG. 3. FIG. 5 is a sectional view of the electronic device 200 in FIG. 3. The electronic device 200 may include an acoustic module 202 and an optical module 100.

The acoustic module 202 may implement a sound playing function, such as playing music, playing broadcast, or reading a book. For example, the acoustic module 202 may include a first control circuit board 2021 and a loudspeaker 2022, where the first control circuit board 2021 is electrically connected to the loudspeaker 2022, and the first control circuit board 2021 may be configured to control the loudspeaker to play a sound. The optical module 100 may implement a light rendering function, for example, forming light of various cold colors or warm colors such as red light, green light, blue light, warm white light, and cold white light (the optical module 100 is described in detail below, and details are not described herein). Therefore, the electronic device 200 may implement both the sound playing function and the light rendering function. For example, the light rendering function of the optical module 100 may be further used in cooperation with the sound playing function of the acoustic module 202. For example, as parameters such as volume, treble, and bass of a sound played by the acoustic module 202 change, parameters such as a color and a flash frequency of light generated by the optical module 100 may change accordingly, achieving more diversity.

For example, the electronic device 200 may further include a housing 201, and the housing 201 has a first mounting position 210 and a second mounting position 220. The acoustic module 202 is located at the first mounting position 210, and the optical module 100 is located at the second mounting position 220. At least a part of an area of the second mounting position 220 may be disposed opposite to at least a part of an area of the first mounting position 210.

For example, the electronic device 200 may further include a decorative ring 203. The decorative ring 203 may be mounted at an opening of the housing 201. The opening may expose the acoustic module 202 and the optical module 100, so that sound of the acoustic module 202 can better diffused out of the housing 201, and light of the optical module 100 can be emitted out of the housing 201. A material of the decorative ring 203 is not limited in this embodiment of this application. The decorative ring 203 may be transparent or opaque, and may have any color.

For example, a support structure 2011 and a fastening structure 2012 may be further disposed on the housing 201. The support structure 2011 may be configured to support the entire electronic device 200, so that the electronic device 200 can be directly placed at a position such as a desktop or a counter. The fastening structure 2012 may be configured to connect to an external device, such as a desktop, a counter, and the foregoing center control console of the vehicle. For example, the fastening structure 2012 may include a structure such as a screw or a bolt, and may further include a bonding adhesive or the like.

In some of the foregoing embodiments, an example in which the optical module 100 and the electronic device 200 are used in the vehicle 1000 is used for description. It may be understood that in addition to the vehicle 1000, the optical module 100 and the electronic device 200 provided in this embodiment of this application may be further used in any other environment in which sound needs to be played and light needs to be generated. For example, the optical module 100 and the electronic device 200 may be further used in the home field, for example, including but not limited to a bedroom, a living room, a bathroom, a bar, a dance hall, a supermarket, an office, and the like. For another example, the optical module 100 and the electronic device 200 may be further used in another transportation means other than the vehicle 1000, for example, including a ship, a train, an airplane, and the like.

The following describes the optical module 100 provided in this embodiment of this application.

Still refer to FIG. 5. The optical module 100 includes a light source 1, a light guide structure 2, and a light-transmitting unit 3. On this basis, for example, the optical module 100 may further include a second control circuit board 4, and the light source 1 may be electrically connected to the second control circuit board 4. In some examples, the second control circuit board 4 and the foregoing first control circuit board 2021 may be electrically connected to a same controller (not shown in the figure). In this way, it is convenient to use the same controller to control the acoustic module 202 and the optical module 100. The controller may be a central processing unit (central processing unit, CPU), a general purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof.

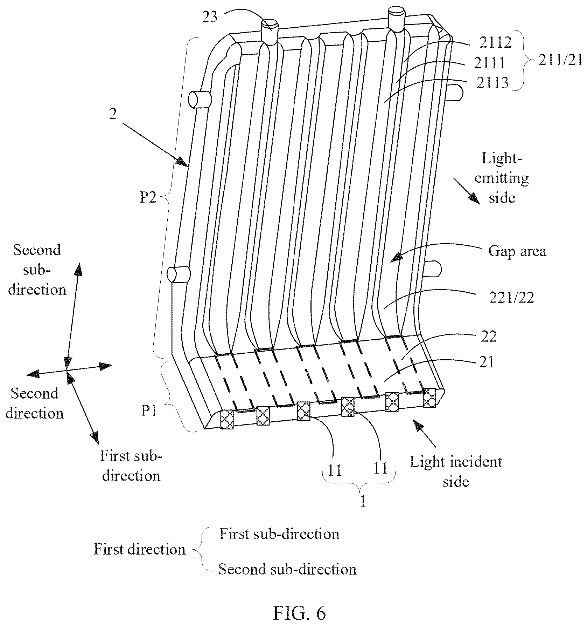

FIG. 6 is a diagram of a structure of a combination of the light source 1 and the light guide structure 2 according to an embodiment of this application. As shown in FIG. 6, the light source 1 includes a plurality of sub-light sources 11, the light guide structure 2 includes a plurality of light guide strips 21, and each sub-light source 11 is located on a light incident side of a corresponding light guide strip 21. The light-transmitting unit 3 is located on a light-emitting side of the plurality of light guide strips 21. Herein, a quantity of the sub-light sources 11 and a quantity of the light guide strips 21 are not limited. For example, there may be one, two, or more sub-light sources 11, and there may be one, two, or more light guide strips 21. In FIG. 6, an example in which there are 6 light guide strips and 6 sub-light sources is used for illustration.

For example, one sub-light source 11 may include one or more LED lights. For example, one sub-light source 11 may include a red LED light, a green LED light, and a blue LED light. It may be understood that, the examples herein are provided for description only. To meet different light emitting requirements, an LED light of any other color may be selected, and the selection is not limited to the LED light, that is, another type of light may also be used.

The light guide structure 2 further includes at least one light-blocking portion 22, and every two adjacent light guide strips 21 are spaced by one light-blocking portion 22. The light-blocking portion 22 may include a light-absorbing material and/or a light-reflecting material, so that when the light guide strips 21 conduct light, the light-blocking portion 22 may be used to prevent light conducted in two adjacent light guide strips 21 from being mixed. The light guide strip 21 may be made of a glass fiber and/or a polymer, and may have good light conduction effect.

For example, the light-reflecting material may be located on a surface that is of the light-blocking portion 22 and that is close to the light guide strip 21. In this way, light can be better limited in the light guide strip 21, that is, light in the light guide strip 21 is not likely to be greatly attenuated in a conduction process.

For example, the light incident side and the light-emitting side of the light guide strip 21 may be respectively located at two ends of the light guide strip in an extension direction of the light guide strip 21.

For example, one of the light incident side and the light-emitting side of the light guide strip 21 may be located at one end of the light guide strip in the extension direction of the light guide strip, and the other may be located at a side surface of the light guide strip, as shown in FIG. 6.

In the optical module 100 provided in this embodiment of this application, light emitted by the plurality of sub-light sources 11 may each enter a corresponding light guide strip 21 through a light incident side of the light guide strip 21, and then the light may be emitted to the light-transmitting unit 3 from a light-emitting side of the light guide strip 21. In addition, because the light-blocking portion 22 is disposed between every two adjacent light guide strips 21, light emitted by the plurality of sub-light sources 11 can be prevented from being mixed in the light guide structure, so that the light emitted by the plurality of sub-light sources 11 can be respectively emitted to different areas of the light-transmitting unit 3 through the corresponding light guide strips 21, and the light-transmitting unit 3 simultaneously implements rendering effect of light of a plurality of colors. It should be noted that no light guide member in the related technology includes the light-blocking portion 22. Therefore, after the light guide structure 2 in this embodiment of this application is replaced with the light guide member, light emitted by the light source 1 is mixed in the light guide member. Consequently, light emitted to the light-transmitting unit 3 is uncontrollable, and a single gradient color is likely to be formed. The optical module provided in this embodiment of this application can well resolve the foregoing technical problem.

The following further describes the light guide structure 2 provided in this embodiment of this application. For ease of description, the extension direction of the light guide strip 21 is referred to as a first direction, and an arrangement direction of the plurality of light guide strips 21 is referred to as a second direction. The first direction and the second direction herein may be a straight line direction, a curve direction, or a circumferential direction. This is described in detail below with reference to the accompanying drawings.

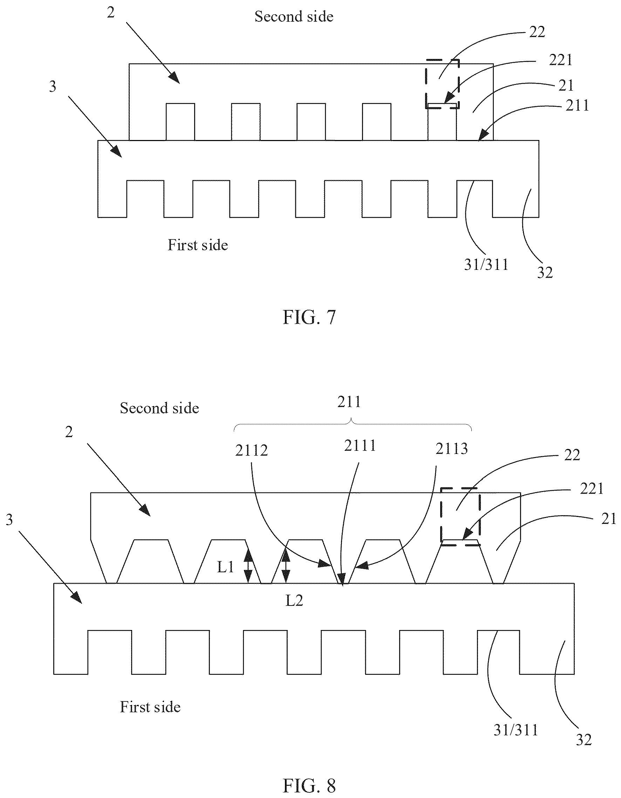

Still refer to FIG. 6. In some embodiments, the light guide structure 2 includes a first area P1 and a second area P2 that are arranged in the first direction, and the first area P1 is closer to the light source than the second area P2. FIG. 7 is a diagram of a structure of a combination of the light guide structure 2 and the light-transmitting unit 3 according to an embodiment of this application. A part that is of the light guide strip 21 and that is in the second area P2 includes a first surface 211 close to the light-transmitting unit 3. A part that is of the light-blocking portion 22 and that is in the second area P2 includes a second surface 221 close to the light-transmitting unit 3. The first surface 211 is closer to the light-transmitting unit 3 than the second surface 221.

In this embodiment, in the second area P2, the first surface 211 is disposed to be closer to the light-transmitting unit 3 than the second surface 221, that is, in the second area P2, the light guide strip 21 is disposed to be closer to the light-transmitting unit 3 than the light-blocking portion 22, so that light conducted by the plurality of light guide strips 21 can reach different areas of the light-transmitting unit 3, and a gap area between adjacent light guide strips 21 is used to enable light on opposite side surfaces of the adjacent light guide strips 21 to generate light mixing effect before entering the light-transmitting unit 3. Therefore, a transition color can be generated in a transition area between light areas of different colors of the light-transmitting unit 3, to enhance rendering effect.

A shape of a part that is of the light guide strip 21 and that is in the first area P1 and a shape of a part that is of the light-blocking portion 22 and that is in the first area P1 are not limited in this application. For example, as shown in FIG. 6, the part that is of the light guide strip 21 and that is in the first area P1 and the part that is of the light-blocking portion 22 and that is in the first area P1 form a plate shape with a same thickness.

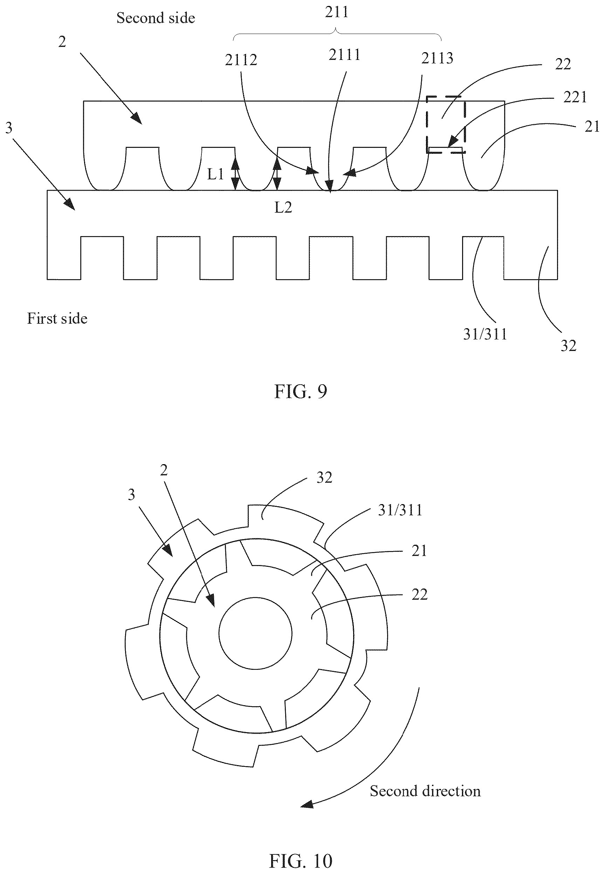

For example, as shown in FIG. 6, the first surface 211 of the light guide strip 21 may include a contact surface 2111, a first connection surface 2112, and a second connection surface 2113. FIG. 8 is a diagram of a structure of another combination of the light guide structure 2 and the light-transmitting unit 3 according to an embodiment of this application, and FIG. 9 is a diagram of a structure of still another combination of the light guide structure 2 and the light-transmitting unit 3 according to an embodiment of this application. The contact surface 2111 is in contact with the light-transmitting unit 3 (not shown in FIG. 6, refer to a position of the light-transmitting unit 3 in FIG. 5). The first connection surface 2112 and the second connection surface 2113 are respectively located on two opposite sides of the contact surface 2111 in the second direction, and there is a gap between the first connection surface 2112 and the light-transmitting unit 3 and a gap between the second connection surface 2113 and the light-transmitting unit 3. The gap L1 between the first connection surface 2112 and the light-transmitting unit 3 gradually decreases in a direction of gradually approaching the contact surface 2111, and/or the gap L2 between the second connection surface 2113 and the light-transmitting unit 3 gradually decreases in a direction of gradually approaching the contact surface 2111.

In this example, the gap between the first connection surface 2112 and the light-transmitting unit 3 is set to gradually decrease in the direction of gradually approaching the contact surface 2111, so that an amount of light emitted from the first connection surface 2112 to the light-transmitting unit 3 can be increased. The gap between the second connection surface 2113 and the light-transmitting unit 3 is set to gradually decrease in the direction of gradually approaching the contact surface 2111, so that an amount of light emitted from the second connection surface 2113 to the light-transmitting unit 3 can be increased. Further, a slope of the first connection surface 2112 and a slope of the second connection surface 2113 may be further changed to adjust light mixing effect of light emitted from the first connection surface 2112 and the second connection surface 2113, so that transition light effect of a transition area between light areas of different colors of the light-transmitting unit 3 may be further adjusted, to enhance rendering effect.

For example, as shown in FIG. 8, any one of the first connection surface 2112 and the second connection surface 2113 may be a plane. For another example, as shown in FIG. 9, any one of the first connection surface 2112 and the second connection surface 2113 may be a curved surface.

In some embodiments, the light guide structure 2 may be of an integrated structure, and has advantages of convenient assembly and high reliability. In some other embodiments, the light guide strip 21 and the light-blocking portion 22 in the light guide structure 2 may be separately manufactured. For example, the light-blocking portion 22 may be integrated into the housing 201, that is, the light-blocking portion 22 may be independently mounted on the housing 201, or may be integrally formed with the housing 201 directly. In this way, a plurality of light guide strips 21 may also be separately mounted, so that any one of the light guide strips 21 is conveniently maintained and repaired.

When the light guide structure 2 is of the integrated structure, for example, refer back to FIG. 6, and a connection portion 23 may be further disposed around the light guide structure 2. An example in which an upper side, a left side, and a right side each include two connection portions in FIG. 6 is used for illustration. A specific position and a quantity of the connection portions 23 may not be limited in this application. In this example, the connection portion 23 is disposed around the light guide structure 2, so that the light guide structure 2 can be conveniently mounted and fastened to the housing 201.

For example, the connection portion 23 may be a bonding adhesive, a connection column, a threaded column, a buckle, a slot, or the like.

In some embodiments, still refer to FIG. 6. The first direction is a fold line direction, for example, including a first straight-line extension segment (denoted as a first sub-direction) in the first area P1 and a second straight-line extension segment (denoted as a second sub-direction) in the second area P2. The second direction is a straight line direction, and the second direction may be perpendicular to the first direction. In this case, refer to FIG. 7 to FIG. 9. In a direction perpendicular to both the second direction and the first sub-direction, the light guide structure 2 has a first side and a second side that are opposite to each other. The first side of the light guide structure 2 may be a light-emitting side. In this case, the light-transmitting unit 3 is located on the first side of the light guide structure 2. Certainly, in another embodiment, the second side of the light guide structure 2 may also be set as the light-emitting side. In this case, a second side of the light guide strip 21 may also have the first surface 211 protruding outwards, and the light-transmitting unit 3 is located on the second side of the light guide structure 2. In addition, both the first side and the second side of the light guide structure 2 may be set as light-emitting sides, and the light-transmitting unit 3 is disposed on both the first side and the second side of the light guide structure 2.

In some other embodiments, as shown in FIG. 10, FIG. 10 is a diagram of a structure of still another combination of the light guide structure 2 and the light-transmitting unit 3 according to an embodiment of this application. In this case, the first direction is a straight line direction (a direction perpendicular to a paper), and the second direction is a circumferential direction. In this case, the light guide structure 2 may be approximately a solid column structure or a hollow column structure (FIG. 10 uses the hollow column structure as an example for illustration). In this case, the light guide structure 2 may have an inner side and an outer side that are opposite to each other. As shown in FIG. 10, the outer side of the light guide structure 2 may be a light-emitting side. In this case, the light-transmitting unit 3 is located on the outer side of the light guide structure 2. Certainly, in another embodiment, the inner side of the light guide structure 2 may also be set as a light-emitting side. In this case, an inner side of the light guide strip 21 may also have a protruding first surface, and the light-transmitting unit 3 is located on the inner side of the light guide structure 2. In addition, both the inner side and the outer side of the light guide structure 2 may be set as light-emitting sides, and the light-transmitting unit 3 is disposed on both the inner side and the outer side of the light guide structure 2.

In some other embodiments, the first direction is a curve direction (for example, an arc direction or an elliptical arc direction), and the second direction is a circumferential direction. In this case, the light guide structure 2 is approximately a hollow sphere structure (not shown in the figure, for example, a spherical structure or an elliptical sphere structure). In this case, the light guide structure 2 may still have the inner side and the outer side that are opposite to each other. The outer side of the light guide structure 2 may be the light-emitting side. In this case, the light-transmitting unit 3 is located on the outer side of the light guide structure 2.

A quantity of light-transmitting units 3 is not limited in this embodiment of this application. For example, there may be one, two, or more light-transmitting units 3 located on any light-emitting side of the light guide structure 2.

The following further describes the light-transmitting unit 3 provided in this embodiment of this application.

In some embodiments, the light-transmitting unit 3 includes a light scatterer. The light scatterer herein means a structure in which light entering the light scatterer can be reflected in a plurality of directions, to achieve scattering effect.

For example, the light scatterer may be a structure including a non-uniform medium. For example, a scattering particle may be doped in a transparent substrate such as acrylic or glass, and a refractive index of the scattering particle is different from a refractive index of the transparent substrate. In this way, when light is emitted to the non-uniform medium (for example, emitted from the transparent substrate to the scattering particle), a propagation direction may be changed, to achieve light scattering effect.

For example, the light scatterer may alternatively be a structure including a uniform medium, for example, a crystal. In this case, scattering effect can still be generated on light.

In some of the foregoing embodiments, the light-transmitting unit 3 is set to include the light scatterer, so that light rendering effect can be improved, and the effect is more beautiful, to further improve product competitiveness.

In some embodiments, an acoustic reflection structure 311 is constructed on one side that is of the light-transmitting unit 3 and that is away from the light guide structure 2 (refer to FIG. 3 and FIG. 7 to FIG. 10). In this case, the light-transmitting unit 3 may be located between the light guide structure 2 and the acoustic module 202, and the acoustic reflection structure 311 of the light-transmitting unit 3 is disposed towards the acoustic module 202 (a position of the acoustic module 202 is not shown in FIG. 7 to FIG. 10), that is, the acoustic reflection structure 311 is constructed on one side that is of the light-transmitting unit 3 and that faces the acoustic module 202. For example, the acoustic reflection structure 311 and a sound output surface of the acoustic module 202 may be disposed at a specific angle. For example, a range of the angle may be 10 degrees to 80 degrees, and further, may be 30 degrees to 60 degrees. For example, the angle may be 10 degrees, 20 degrees, 30 degrees, 40 degrees, 45 degrees, 50 degrees, 60 degrees, 70 degrees, 80 degrees, or the like. In this embodiment, the light-transmitting unit 3 can implement both light rendering effect and sound adjustment effect. The acoustic reflection structure 311 may reflect an acoustic wave, so that the acoustic wave is scattered in different directions, to generate diffraction and change output sound quality effect.

For example, refer to FIG. 4 and FIG. 5. In the electronic device 200, at least a part of an area of the second mounting position 220 may be disposed opposite to at least a part of an area of the first mounting position 210. In this way, when the light-transmitting unit 3 is located at the second mounting position 220, the light-transmitting unit 3 may be opposite to the acoustic module 202 located at the first mounting position 210, that is, the acoustic reflection structure 311 may face the acoustic module 202.

For example, the acoustic reflection structure 311 may include a plurality of first groove structures 31, and depths of the plurality of first groove structures 31 may be the same (that is, as shown in FIG. 7 to FIG. 10), or may be different (that is, as shown in FIG. 3). Depths of the plurality of first groove structures 31 may be adjusted to obtain different sound quality. In this case, a shape of the acoustic reflection structure 311 is equivalent to being constructed as a Schroeder diffuser, and the acoustic wave may be reflected by the plurality of first groove structures 31, so that the acoustic wave is scattered in different directions, to generate diffraction and change output sound quality effect.

For example, the plurality of first groove structures 31 are in a strip shape, and a cross-sectional shape of the plurality of first groove structures 31 may be any one of a rectangle, a V shape, a U shape, or a W shape.

In some examples, refer to FIG. 7 to FIG. 10. An extension direction of the plurality of first groove structures 31 may be the same as the extension direction of the plurality of light guide strips 21, and an arrangement direction of the plurality of first groove structures 31 is the same as the arrangement direction of the plurality of light guide strips 21. In this case, one or more light guide strips 21 may be disposed on the back surface of one first groove structure 31, or one or more light guide strips 21 may be disposed on the back surface of an edge structure 32 beside the first groove structure 31 (not shown in the figure), or a same light guide strip 21 may be disposed on both the back surfaces of the first groove structure 31 and the edge structure 32 that are adjacent to each other (not shown in the figure). The back surface herein means a surface on one side that is of the light-transmitting unit 3 and that is close to the light guide structure 2. In this example, light rendering effect of different colors can be formed at different positions of the first groove structures 31 and different positions of the edge structures 32.

For example, widths of different first groove structures 31 in the second direction may be the same or may be different. Similarly, widths of different edge structures 32 in the second direction may be the same or may be different. Reduction of the widths of the first groove structures 31 in the second direction and the widths of the edge structures 32 in the second direction can implement mixing effect of two or more types of light. Increase of the widths of the first groove structures 31 in the second direction and the widths of the edge structures 32 in the second direction can reduce mixing effect of adjacent light. For example, a dark area may be formed in a transition area of the light-transmitting unit 3.

In some examples, an orthographic projection of the first groove structure 31 on a reference surface at least partially overlaps an orthographic projection of the light guide strip 21 on the reference surface, where the reference surface is a surface on which the first direction and the second direction are located. It may be understood that a thickness of the light-transmitting unit 3 at a position of the first groove structure 31 is thinner than a thickness of the light-transmitting unit 3 at a position of the edge structure 32. In this example, the orthographic projection of the first groove structure 31 on the reference surface is set to at least partially overlap the orthographic projection of the light guide strip 21 on the reference surface, so that light rendering effect of higher brightness can be generated at the position of the first groove structure 31, light rendering effect of different colors can be generated at different positions of the first groove structure 31, and dark transition light rendering effect can be generated at the position of the edge structure 32. Therefore, the light-transmitting unit 3 can simultaneously implement rendering effect of light of a plurality of colors, and a better transition color is formed between adjacent light of two colors.

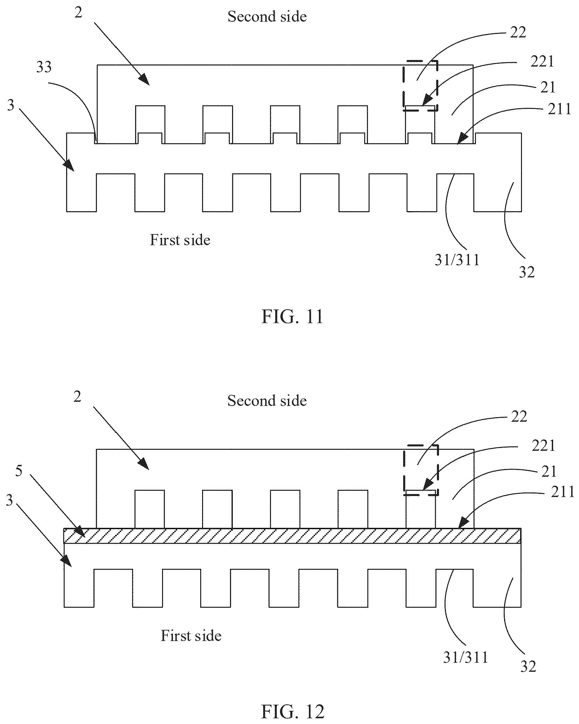

In some embodiments, refer to FIG. 11. FIG. 11 is a diagram of a structure of still another combination of the light guide structure 2 and the light-transmitting unit 3 according to an embodiment of this application. A second groove structure 33 is disposed on a surface that is of the light-transmitting unit 3 and that is close to the light guide structure 2, and at least a part of the light guide strip 21 extends into the second groove structure 33. It may be understood that, for embodiments shown in FIG. 8 to FIG. 10, the second groove structure 33 may also be additionally disposed on the light-transmitting unit 3, and details are not described herein again.

For example, there may be one or more second groove structures 33. At least a part of one light guide strip 21 may extend into one second groove structure 33, or at least a part of two or more light guide strips 21 may extend into a same second groove structure 33.

For example, the light guide strip 21 and the second groove structure 33 may be in interference fit or gap fit.

For example, a position of the second groove structure 33 may be opposite to the position of the first groove structure 31 (that is, as shown in FIG. 11), or may be opposite to the foregoing position of the edge structure 32 (not shown in the figure).

For example, a shape of the second groove structure 33 may further match a shape of the light guide strip 21 (for example, a shape of the first surface of the light guide strip), so that a contact area between the light guide strip 21 and the light-transmitting unit 3 may be larger.

In this embodiment, the second groove structure 33 is disposed on the surface that is of the light-transmitting unit 3 and that is close to the light guide structure 2, so that the second groove structure 33 can be used to provide a positioning and support function for the light guide strip 21. In addition, this increases an amount of light emitted from the light guide strip 21 to the light-transmitting unit 3, to improve light-emitting brightness of the light-transmitting unit 3.

In some embodiments, refer to FIG. 12. FIG. 12 is a diagram of a structure of still another combination of the light guide structure 2 and the light-transmitting unit 3 according to an embodiment of this application. A surface that is of the light-transmitting unit 3 and that is close to the light guide structure 2 includes a barrier layer 5, and a value range of transmittance of the barrier layer 5 is from 30% to 60% (including 30% and 60%). It may be understood that, for embodiments shown in FIG. 8 to FIG. 11, the barrier layer 5 may also be additionally disposed, and details are not described herein again.

In this embodiment, when the transmittance of the barrier layer 5 is close to or equal to 30%, the barrier layer 5 can have good shielding effect on the light guide structure 2. In other words, when the light guide structure 2 is in a dark state, it is difficult for human eyes to see the light guide structure from the other side of the light-transmitting unit 3. However, when the light guide structure 2 is in a bright state, light of the light guide structure 2 can still be emitted to the light-transmitting unit 3 through the barrier layer 5. In addition, when the transmittance of the barrier layer 5 is close to or equal to 60%, the barrier layer 5 can have shielding effect on the light guide structure 2 to some extent. In this case, when the light guide structure 2 is in the bright state, more light of the light guide structure 2 can be emitted to the light-transmitting unit 3 through the barrier layer.

For example, the value range of the transmittance of the barrier layer 5 may be from 40% to 45% (including 40% and 45%). In this case, the barrier layer 5 can have good shielding effect on the light guide structure 2, and when the light guide structure 2 is in the bright state, more light of the light guide structure 2 can be emitted to the light-transmitting unit 3 through the barrier layer 5, so that light rendering effect is improved.

The foregoing descriptions are merely specific embodiments of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An optical module, comprising:
a light guide structure, comprising a plurality of light guide strips and at least one light-blocking portion, wherein every two adjacent light guide strips are spaced by one light-blocking portion;
a light source, comprising plurality of sub-light sources, wherein each sub-light source is located on a light incident side of a corresponding light guide strip;
and a light-transmitting unit, located on a light-emitting side of the plurality of light guide strips.

2. The optical module according to claim 1, wherein
an extension direction of the light guide strip is a first direction, the light guide structure comprises a first area and a second area that are arranged in the first direction, and the first area is closer to the light source than the second area; and
a part that is of the light guide strip and that is in the second area comprises a first surface close to the light-transmitting unit; a part that is of the light-blocking portion and that is in the second area comprises a second surface close to the light-transmitting unit; and the first surface is closer to the light-transmitting unit than the second surface.

3. The optical module according to claim 2, wherein
the first surface comprises a contact surface, a first connection surface, and a second connection surface, and the contact surface is in contact with the light-transmitting unit; and
an arrangement direction of the plurality of light guide strips is a second direction, the first connection surface and the second connection surface are respectively located on two opposite sides of the contact surface in the second direction, and there is a gap between the first connection surface and the light-transmitting unit and a gap between the second connection surface and the light-transmitting unit, wherein
the gap between the first connection surface and the light-transmitting unit gradually decreases in a direction of gradually approaching the contact surface; and/or the gap between the second connection surface and the light-transmitting unit gradually decreases in a direction of gradually approaching the contact surface.

4. The optical module according to any one of claims 1 to 3, wherein the light-transmitting unit comprises a light scatterer.

5. The optical module according to any one of claims 1 to 4, wherein an acoustic reflection structure is located on one side that is of the light-transmitting unit and that is away from the light guide structure.

6. The optical module according to claim 5, wherein the acoustic reflection structure comprises a plurality of first groove structures.

7. The optical module according to claim 6, wherein the plurality of first groove structures are in a strip shape, an extension direction of the plurality of first groove structures is the same as an extension direction of the plurality of light guide strips, and an arrangement direction of the plurality of first groove structures is the same as an arrangement direction of the plurality of light guide strips.

8. The optical module according to claim 6 or 7, wherein
an extension direction of the light guide strip is a first direction, and an arrangement direction of the plurality of light guide strips is a second direction; and
an orthographic projection of the first groove structure on a reference surface at least partially overlaps an orthographic projection of the light guide strip on the reference surface, wherein the reference surface is a surface on which the first direction and the second direction are located.

9. The optical module according to any one of claims 1 to 8, wherein a second groove structure is located on a surface that is of the light-transmitting unit and that is close to the light guide structure, and at least a part of the light guide strip extends into the second groove structure.

10. The optical module according to any one of claims 1 to 9, wherein a surface that is of the light-transmitting unit and that is close to the light guide structure comprises a barrier layer, and a value range of transmittance of the barrier layer is from 30% to 60% (including 30% and 60%).

11. An electronic device, comprising:
an acoustic module;
and an optical module, wherein
the optical module comprises a light source, a light guide structure, and a light-transmitting unit, the light source comprises a plurality of sub-light sources, the light guide structure comprises a plurality of light guide strips and at least one light-blocking portion, every two adjacent light guide strips are spaced by one light-blocking portion, each sub-light source is located on a light incident side of a corresponding light guide strip, and the light-transmitting unit is located on a light-emitting side of the plurality of light guide strips; and
the light-transmitting unit is located between the light guide structure and the acoustic module, and an acoustic reflection structure is located on one side that is of the light-transmitting unit and that is close to the acoustic module.

12. A vehicle, comprising: a vehicle body, wherein the optical module according to any one of claims 1 to 10 is disposed on the vehicle body, and/or the electronic device according to claim 11 is disposed on the vehicle body.
